(19) Europäisches Patentamt

European Patent Office

Office européen des brevets

(11) Veröffentlichungsnummer: **0 277 643**
**A1**

(12) **EUROPÄISCHE PATENTANMELDUNG**

(21) Anmeldenummer: 88101495.5

(22) Anmeldetag: 02.02.88

(51) Int. Cl.⁴: **G06F 11/28** , G06F 11/20

(30) Priorität: 03.02.87 DE 3703184

(43) Veröffentlichungstag der Anmeldung:
10.08.88 Patentblatt 88/32

(84) Benannte Vertragsstaaten:
AT BE CH DE FR GB IT LI NL SE

(71) Anmelder: Siemens Aktiengesellschaft Berlin
und München
Wittelsbacherplatz 2
D-8000 München 2(DE)

(72) Erfinder: Caprasse, Friedhelm, Dipl.-Ing.
Rossinistrasse 5
D-8011 Baldham(DE)

(54) Verfahren und Anordnung zur Überwachung der Folgerichtigkeit aufeinanderfolgender binärer Codesignalgruppen in Datenverarbeitungseinrichtungen.

(57) Zur Überwachung der Folgerichtigkeit aufeinanderfolgender binärer Codesignalgruppen (CG) in Datenverarbeitungsanlagen durch Paritätsbitvergleich des zu einer wirksamen Codesignalgruppe (CG) aktuell ermittelten Paritätsbits (PAKT) mit dem beim Auftreten der Vorgängercodesignalgruppe vorausschauend ermittelten und bis zum Auftreten der wirksamen Codesignalgruppe (CG) zwischengespeicherten Paritätsbit (PAKT') wird das jeweils vorausschauende Paritätsbit ausgehend von der wirksamen Codesignalgruppe (CG) dadurch ermittelt, daß zuerst ein beim Übergang auf die Nachfolgercodesignalgruppe einen Paritätsbitwechsel anzeigendes Paritätsbitwechsel-Anzeigesignal (PW) erzeugt und anschließend in Verbindung mit dem zur wirksamen Codesignalgruppe ermittelten aktuellen Paritätsbit (PAKT) das vorausschauende, zur Nachfolgercodesignalgruppe gehörende Paritätsbit (PV) gebildet wird.

## FIG 1

## Verfahren und Anordnung zur Überwachung der Folgerichtigkeit aufeinanderfolgender binärer Codesignalgruppen in Datenverarbeitungseinrichtungen

Die Erfindung betrifft ein Verfahren und eine Anordnung zur Überwachung der Folgerichtigkeit aufeinanderfolgender binärer Codesignalgruppen in Datenverarbeitungseinrichtungen entsprechend dem Oberbegriff des Patentanspruches 1.

Aus der DE-AS 25 18 588 ist insbesondere bezogen auf die dort als Adressen zur Adressierung eines Befehlswortspeichers verwendeten Codesignalgruppen ein gemäß dem Oberbegriff des Patentanspruches 1 arbeitendes Verfahren bekannt. Dabei wird das jeweils vorausschauende, zur Nachfolgeradresse gehörende Paritätsbit ausgehend von der gegebenen Adresse zur Ansteuerung des Speichers bei der Einspeicherung eines Befehls ermittelt und in einer zusätzlich zum Befehl vorgesehenen Bitstelle abgespeichert. Mit dem Auslesen eines Befehls steht daher jedesmal das zur Nachfolgeradresse gehörende und damit vorausschauende Paritätsbit zur Verfügung. Dieses Paritätsbit wird dann zwischengespeichert und beim Ansteuern des Befehlsspeichers durch die Nachfolgeradresse mit dem aus dieser Nachfolgeradresse direkt abgeleiteten Paritätsbit verglichen. Besteht Ungleichheit, wird ein Fehlersignal erzeugt.

Dieses Verfahren erfordert selbst bei Abspeicherung nur der jeweils vorausschauenden Paritätsbits anstelle des ganzen Befehlswortes einen eine der Anzahl der vorkommenden Adressen entsprechende Anzahl von Speicherstellen aufweisenden Speicher. Der für einen solchen Speicher benötigte Hardwareaufwand ist sehr groß und von der Anzahl der Codesignalgruppen abhängig.

Aufgabe der Erfindung ist es daher, ein Verfahren und eine Anordnung zur Überwachung der Folgerichtigkeit aufeinanderfolgender binärer Codesignalgruppen zu schaffen, ohne daß gatterintensive Speicher benötigt werden.

Diese Aufgabe wird hinsichtlich des Verfahrens gemäß der Erfindung durch die Merkmale des kennzeichnenden Teiles des Patentanspruches 1 gelöst. Entscheidend dabei ist, daß die vorausschauende Paritätsbitermittlung nicht vorab erfolgt und die Ergebnisse für alle Codesignalgruppen in einem gatterintensiven Speicher abgespeichert werden, sondern daß das Paritätsbit für die Nachfolgercodesignalgruppe ausgehend von der wirksamen Codesignalgruppe jeweils erst durch Ableitung eines Zwischensignales in Verbindung mit dem zur wirksamen Codesignalgruppe ermittelten aktuellen Paritätsbit ermittelt wird. Das Zwischensignal gibt dabei an, ob sich das aktuelle Paritätsbit der wirksamen Codesignalgruppe beim Übergang zur Nachfolgercodesignalgruppe ändern wird oder nicht. Es kann in einfacher Weise aus den Bitstellen der jeweils wirksamen Codesignalgruppe durch eine entsprechende Verknüpfung gebildet werden. Zusammen mit dem zur wirksamen Codesignalgruppe ermittelten aktuellen Paritätsbit kann dann das zur Nachfolgercodesignalgruppe gehörende Paritätsbit vorhergesagt werden.

Um zu verhindern, daß zu Beginn einer neuen Folge von Codesignalgruppen bzw. bei Sprüngen innerhalb solcher Folgen wegen des zunächst fehlenden, vorausschauend ermittelten Paritätsbits irrtümlich ein Fehlersignal erzeugt wird, wird gemäß einer Weiterbildung der Erfindung gemäß Anspruch 2 das mit der jeweils ersten Codesignalgruppe normalerweise mitgeführte Paritätsbit als vorausschauend ermitteltes Paritätsbit zwischengespeichert.

Andererseits lassen sich irrtümlich erzeugte Fehlersignale gemäß einer anderen Weiterbildung der Erfindung dadurch allgemein unterdrücken, daß der Vergleich zwischen dem jeweils ermittelten aktuellen Paritätsbit und dem jeweils vorausschauend ermittelten Paritätsbit durch ein Gültigkeitssignal gesteuert wird.

Die Schaltungsanordnung zur Durchführung des Verfahrens gemäß der Erfindung ergibt sich aus Patentanspruch 4.

Einzelheiten der Erfindung seien nachfolgend anhand eines in der Zeichnung dargestellten Ausführungsbeispieles näher erläutert. Im einzelnen zeigen

FIG 1 ein Blockschaltbild zur Überwachung der Folgerichtigkeit aufeinanderfolgender Codesignalgruppen gemäß der Erfindung und

FIG 2 eine Verknüpfungsanordnung zur Ableitung des Paritätsbitwechsel-Anzeigesignals in der Paritätsbitvorausschaueinrichtung von FIG 1.

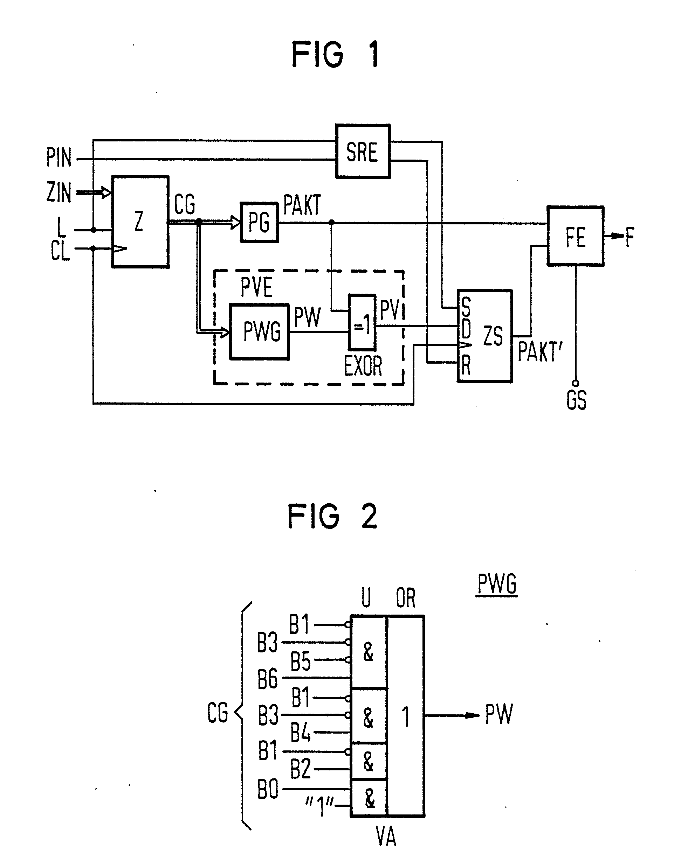

Ausgangspunkt der in FIG 1 dargestellten Schaltungsanordnung zur Überwachung der Folgerichtigkeit aufeinanderfolgender Codesignalgruppen CG ist ein Zähler Z, der von einem Taktsignal CL schrittweise fortgeschaltet wird und dadurch eine Folge von binären Codesignalgruppen CG liefert. Über einen Dateneingang ZIN kann der Zähler Z zu Beginn einer Codesignalgruppenfolge mit einem bestimmten Anfangszählerstand geladen werden, was mit dem Ladesignal L gesteuert wird. Die am Zählerausgang wirksamen Codesignalgruppen CG werden gleichzeitig einem Paritätsbitgenerator PG und einer Paritätsbitvorausschaueinrichtung PVE zugeführt. Der Paritätsbitgenerator PG ermittelt aus der wirksamen Codesignalgruppe CG ein aktuelles Paritätsbit PAKT. Das aktuelle Paritätsbit PAKT wird an eine Fehlermeldeeinrichtung FE und an die Paritätsbitvorausschaueinrichtung PVE weitergegeben. Die Paritätsbitvorausschaueinrichtung PVE ermittelt aus der wirksamen Codesignalgruppe CG und dem aktuellen Paritätsbit PAKT ein zur Nachfolgercodesignalgruppe gehörendes vorausschauendes Paritätsbit PV. Dabei wird zunächst ausgehend von der wirksamen Codesignalgruppe CG von der Paritätsbit wechsel-Anzeigeeinrichtung PWG ein Paritätsbitwechsel-Anzeigesignal PW erzeugt. Das Paritätsbitwechsel-Anzeigesignal PW gibt an, ob sich die Parität der wirksamen Codesignalgruppe CG beim Übergang auf die Nachfolgercodesignalgruppe ändern wird. Nimmt das Paritätsbitwechsel-Anzeigesignal PW den logischen Wert 1 an, ändert sich die Parität. Durch EXKLUSIV-ODER-Verknüpfung EXOR des aktuellen Paritätsbits PAKT mit den Paritätsbitwechsel-Anzeigesignalen PW wird dann das zur Nachfolgercodesignalgruppe gehörende vorausschauende Paritätsbit PV ermittelt.

Das vorausschauende Paritätsbit PV wird an den Dateneingang D eines Zwischenspeichers ZS weitergegeben, der zum Beispiel ein D-FLIP-FLOP mit Setzeingang S und Rücksetzeingang R sein kann. Der Zwischenspeicher ZS speichert das vorausschauend ermittelte Paritätsbit PV, bis die dazugehörige Codesignalgruppe wirksam wird. Die Steuerung erfolgt dabei mit dem gleichen Taktsignal CL, mit dem der Zähler Z weitergeschaltet wird. Mit Auftreten eines Taktimpulses CL wird das vorausschauend ermittelte Paritätsbit PV im Zwischenspeicher gespeichert und als aktuelles Paritätsbit PAKT' am Zwischenspeicherausgang ausgegeben.

Das vom Zwischenspeicher ZS ausgegebene Paritätsbit PAKT' wird an die Fehlermeldeeinrichtung FE weitergegeben. Diese vergleicht das vom Paritätsbitgenerator PG erzeugte Paritätsbit PAKT' mit dem vom Zwischenspeicher ZS ausgegebenen Paritätsbit PAKT. Im Fehlerfall, also bei Nichtübereinstimmung der beiden Paritätsbits, wird ein Fehlersignal F erzeugt. Zweckmäßigerweise wird die Ausgabe des Fehlersignales F über ein Gültigkeitssignal GS gesteuert, um zwischenzeitlich entstehende Fehlersignale F, hervorgerufen durch nicht exakt gleichzeitiges Vorliegen der beiden Paritätsbits PAKT und PAKT', zu unterdrücken.

Zum Starten einer Codesignalgruppenfolge wird das zur ersten wirksamen Codesignalgruppe gehörende mitgelieferte Paritätsbit PIN über die Ladeeinrichtung SRE an den Zwischenspeicher ZS übergeben, in dem ein entsprechendes Setz-oder Rücksetzsignal zum sofortigen Wirksamschalten dieses Paritätsbits abhängig vom Ladesignal L gebildet wird. Auf diese Weise kann trotz des an sich nicht vorhandenen vorausschauenden Paritätsbits PV eine Fehlerüberwachung auch bei der jeweils ersten Codesignalgruppe einer Folge in gleicher Weise durchgeführt werden. Hierauf kann jedoch verzichtet werden, wenn durch entsprechende Steuerung des Gültigkeitssignales GS für die Fehlermeldeeinrichtung FE ein irrtümlich gebildetes Fehlersignal unterbunden wird.

FIG 2 zeigt die Verknüpfungsanordnung VA der Paritätsbitwechsel-Anzeigeeinrichtung PWG in der Paritätsbitvorausschaueinrichtung PVE. Sie ermittelt in Abhängigkeit von der eingangsseitig anliegenden Codesignalgruppe CG ein Paritätsbitwechsel-Anzeigesignal PW. Die Codesignalgruppe CG wird dabei mit acht Bitstellen B0 bis B7 angenommen. Für die Ermittlung des Paritätsbitwechsel-Anzeigesignales werden in diesem Fall nur die Bitstellensignale B0 bis B6 benötigt. Diese durchlaufen in der Verknüpfungsanordnung VA zwei Gatterebenen. Die erste Gatterebene U weist vier UND-Gatter mit aufsteigender Anzahl von Eingängen auf, die jeweils ein Signal liefern, wenn eine bestimmte Kombination von Bitstellensignalen an deren Eingängen auftritt. In der zweiten Gatterebene OR werden die einzelnen UND-Gatterausgänge durch eine ODER-Verknüpfung zu einem einzigen Ausgangssignal PW zusammengeschaltet. Insgesamt bildet die Verknüpfungsanordnung VA die Beziehung

$$PW_i = 2^0 \ v \ \bigvee_{n=0}^{n=\left|\frac{i-3}{2}\right|} \left[ \left( \bigwedge_{m=0}^{m=n} \overline{2^{2m+1}} \right) \wedge 2^{2(n+1)} \right] \quad \text{für } i > 2$$

für absteigend aufeinanderfolgende Codesignalgruppen nach.
Dabei bedeutet:
i    Gesamte Bitstellenzahl einer Codesignalgruppe mit den Bitstellensignalen $2^{(i-1)}$, $2^{(1-2)}$, ... $2^1$, $2^0$
V Disjunktive Verknüpfung der einzelnen Bitstellensignale
$\wedge$ Konjunktive Verknüpfung der einzelnen Bitstellensignale
| | Ganzzahliger Teil von $\frac{i-3}{2}$

Sollen aufsteigend aufeinanderfolgende Codesignalgruppen überwacht werden, muß die Verknüpfungsanordnung VA die Beziehung

$$PW_i = \overline{2^0} \; v \; \sqrt{\left[ \left( \bigwedge_{m=0}^{m=n} 2^{2m+1} \right) \wedge \overline{2^{2(n+1)}} \right]}^{\;n=\left|\frac{i-3}{2}\right|} \quad \text{für } i > 2$$

nachbilden. Das Bitstellensignal BO = $2^0$ kann entweder direkt oder über ein UND-Gatter, dessen Eingang so beschaltet ist, daß das Bitstellensignal BO unmittelbar durchgeschaltet wird, zur OR-Gatterebene geführt werden.

## Ansprüche

1. Verfahren zur Überwachung der Folgerichtigkeit aufeinanderfolgender binärer Codesignalgruppen, insbesondere von Binärzahlen vorgegebener Länge als Adressen in Datenverarbeitungseinrichtungen, wobei zur Überwachung der Folgerichtigkeit der aufeinanderfolgenden Codesignalgruppen das zu einer Codesignalgruppe mittels eines Paritätsbitgenerators aktuell ermittelte Paritätsbit mit dem zu dieser Codesignalgruppe beim Auftreten der Vorgängercodesignalgruppe vorausschauend ermittelten und zwischengespeicherten Paritätsbit verglichen und bei Ungleichheit ein Fehlersignal erzeugt wird, **dadurch gekennzeichnet,** daß zu jeder wirksamen Codesignalgruppe ($CG_x$) ein beim Übergang zur Nachfolgercodesignalgruppe ($CG_{x\pm1}$) einen möglichen Paritätsbitwechsel anzeigendes Paritätsbitwechsel-Anzeigesignal ($PW_i$) für aufsteigend aufeinanderfolgende Codesignalgruppen ($CG_x$, $CG_{x+1}$) nach der Beziehung

$$PW_i = \overline{2^0} \; v \; \sqrt{\left[ \left( \bigwedge_{m=0}^{m=n} 2^{2m+1} \right) \wedge \overline{2^{2(n+1)}} \right]}^{\;n=\left|\frac{i-3}{2}\right|} \quad \text{für } i > 2$$

und für absteigend aufeinanderfolgende Codesignalgruppen ($CG_x$, $CG_{x-1}$) nach der Beziehung

$$PW_i = 2^0 \; v \; \sqrt{\left[ \left( \bigwedge_{m=0}^{m=n} \overline{2^{2m+1}} \right) \wedge 2^{2(n+1)} \right]}^{\;n=\left|\frac{i-3}{2}\right|} \quad \text{für } i > 2$$

aus den Bitstellensignalen ($2^{n+1}$, $2^n$, ..., $2^1$, $2^0$) der jeweils wirksamen Codesignalgruppe ($CG_x$) abgeleitet wird und daß aus dem jeweils ermittelten Paritätsbitwechsel-Anzeigesignal ($PW_i$) zusammen mit dem aus der wirksamen Codesignalgruppe ($CG_x$) jeweils ermittelten aktuellen Paritätsbit (PAKT) durch EXKLUSIV-ODER-Verknüpfung (EXOR) das zur Nachfolgercodesignalgruppe ($CG_{x\pm1}$) gehörende Paritätsbit (PV) vorausschauend ermittelt wird.

2. Verfahren nach Anspruch 1, **dadurch gekennzeichnet,** daß jeweils bei Beginn einer neuen Folge von Codesignalgruppen bzw. bei Sprüngen innerhalb solcher Folgen das mit der ersten Codesignalgruppe (ZIN) normalerweise mitgelieferte Paritätsbit (PIN) als vorausschauend ermitteltes Paritätsbit (PV) zwischengespeichert wird.

3. Verfahren nach Anspruch 1 oder 2, **dadurch gekennzeichnet,** daß der Vergleich zwischen dem jeweils ermittelten aktuellen Paritätsbit (PAKT) und dem jeweils vorausschauend ermittelten und zwischengespeicherten Paritätsbit (PAKT') durch ein Gültigkeitssignal (GS) gesteuert wird.

4. Schaltungsanordnung zur Durchführung des Verfahrens nach einem der Ansprüche 1 bis 3, bestehend aus einem Paritätsbitgenerator (PG) zur Ermittlung des aktuellen Paritätsbits (PAKT) aus der jeweils wirksamen Codesignalgruppe, einer Paritätsbitvorausschaueinrichtung (PVE), einem Zwischenspeicher (ZS) mit Ladeeinrichtung (SRE) und einer Fehlermeldeeinrichtung (FE),

**dadurch gekennzeichnet,**

daß die Paritätsbitvorausschaueinrichtung (PVE) eine Paritätsbitwechsel-Anzeigeeinrichtung (PWG) zur Bildung eines Paritätsbitwechsel-Anzeigesignales (PW) und dieser nachgeschaltet eine Paritätsbitvorausschaulogik (EXOR) zur Ermittlung des vorausschauenden Paritätsbits (PV) in Verbindung mit dem aus der jeweils wirksamen Codesignalgruppe (CG$_x$) ermittelten aktuellen Paritätsbit (PAKT) aufweist, wobei die Paritätsbitwechsel-Anzeigeeinrichtung (PWG) aus einer logischen Verknüpfungsanordnung (VA) besteht, die für aufsteigend aufeinanderfolgende Codesignalgruppen (CG$_x$, CG$_{x+1}$) die logische Beziehung

$$PW_i = \overline{2^0} \; v \; \bigvee_{n=0}^{n=\left|\frac{i-3}{2}\right|} \left[ \left( \bigwedge_{m=0}^{m=n} 2^{2m+1} \right) \wedge \overline{2^{2(n+1)}} \right] \quad \text{für } i > 2$$

und für absteigend aufeinanderfolgende Codesignalgruppen (CG$_x$, CG$_{x-1}$) die logische Beziehung

$$PW_i = 2^0 \; v \; \bigvee_{n=0}^{n=\left|\frac{i-3}{2}\right|} \left[ \left( \bigwedge_{m=0}^{m=n} \overline{2^{2m+1}} \right) \wedge 2^{2(n+1)} \right] \quad \text{für } i > 2$$

aus den Bitstellensignalen ($2^{i-1}$, $2^i$, ... $2^1$, $2^0$) der jeweils wirksamen Codesignalgruppe (CG$_x$) nachbildet.

# FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-4 074 229 (PREY)<br>* Insgesamt *<br>--- | 1 | G 06 F 11/28<br>G 06 F 11/10 |
| A | US-A-3 911 261 (TAYLOR)<br>* Spalte 6, Zeile 48 - Spalte 7, Zeile 4 *<br>--- | 1,4 | |
| A | US-A-3 567 916 (FULLTON)<br>* Spalte 2, Zeile 45 - Spalte 3, Zeile 35; Figuren 2,3 *<br>--- | 1,4 | |
| A | US-A-3 699 322 (DORR)<br>--- | | |
| A | US-A-3 805 040 (BODEN et al.)<br>----- | | |

|  |
|---|
| RECHERCHIERTE SACHGEBIETE (Int. Cl.4) |
| G 06 F 11/28<br>G 06 F 11/10<br>G 06 F 11/08 |

Der vorliegende Recherchenbericht wurde für alle Patentansprüche erstellt

| Recherchenort | Abschlußdatum der Recherche | Prüfer |
|---|---|---|
| DEN HAAG | 07-03-1988 | CRECHET P.G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)